## Europäisches Patentamt
## European Patent Office
## Office européen des brevets

(19)

(11) Veröffentlichungsnummer: **0 151 988**
**B1**

(12) # EUROPÄISCHE PATENTSCHRIFT

(45) Veröffentlichungstag der Patentschrift:
**04.11.87**

(51) Int. Cl.⁴: **B 60 T 15/04**

(21) Anmeldenummer: **85100751.8**

(22) Anmeldetag: **25.01.85**

(54) **Zweikreis-Bremsventil.**

(30) Priorität: **25.01.84 DE 3402499**

(43) Veröffentlichungstag der Anmeldung:
**21.08.85 Patentblatt 85/34**

(45) Bekanntmachung des Hinweises auf die Patenterteilung:
**04.11.87 Patentblatt 87/45**

(84) Benannte Vertragsstaaten:
**BE DE FR GB IT NL SE**

(56) Entgegenhaltungen:
**AT-B-321 144**
**DE-A-2 507 661**
**DE-A-3 022 435**

(73) Patentinhaber: **KNORR- BREMSE AG, Moosacher Strasse 80 Postfach 401060, D-8000 München 40 (DE)**

(72) Erfinder: **Vollmer, Otto, Joergstrasse 31, D-8000 München 21 (DE)**

EP 0 151 988 B1

## Beschreibung

Die Erfindung betrifft ein Zweikreis-Bremsventil nach dem Gattungsbegriff des Patentanspruches 1. Ein solches Zweikreis-Bremsventil ist z. B. aus der AT-B- 321 144 schon bekannt.

Zweikreis-Bremsventile, insbesondere Fußbremsventile für Bremsanlagen von Fahrzeugen, steuern den Betriebsdruck für den Hinterachsbremskreis und den Vorderachsbremskreis des Fahrzeugs. Bei sögenannten Mischdruck-Bremsanlagen kann als Vorratsdruck des ersten Kreises ein Normaldruck von z. B. 8 bar vorgesehen sein, während für den Vorratsdruck des zweiten Kreises ein Hochdruck von z. B. 16 bar vorgesehen sein kann. Wenn die Wirkflächen auf den entgegengesetzten Seiten des Relaiskolbens gleich sind, dann wird am ausgesteuerten Druck des zweiten Kreises normalerweise der ausgesteuerte Druck des ersten Kreises erreicht, da die dem ersten Kreis zugewandte Wirkfläche des Relaiskolbens vom ausgesteuerten Druck des ersten Kreises beaufschlagbar ist.

Es sind jedoch Situationen möglich, in welchen bei intakten ersten und zweiten Kreisen gleichzeitig ein mechanisches Durchsteuern der Bremsventilkolbenanordnung bis auf Anschlag vorgenommen wird. In einer derartigen Situation wird bei herkömmlichen Bremsventilen ohne Druckbegrenzung in Kauf zu nehmen sein, daß der Vorrats-Hochdruck des zweiten Kreises bei ständig offen stehendem Einlaßventil voll durchsteuert, also in die Anlage des zweiten Kreises gelangen könnte. Der Hochdruck in den Bremszylindern des zweiten Kreises, der Vorderachse, und am Steueranschluß des z. B. an den zweiten Kreis angeschlossenen Anhängersteuerventils ist unter anderem aus Festigkeitsgründen unzulässig.

Davon ausgehend besteht die Aufgabe der Erfindung darin, ein Zweikreis-Bremsventil der in Rede stehenden Art so auszubilden, daß eine wirksame Hochdruck-Begrenzung des zweiten Kreises erreicht wird, wenn das mechanische Durchsteuern vorzugsweise bei intakten ersten und zweiten Kreisen vollzogen wird.

Zur Lösung dieser Aufgabe dienen die Merkmale nach dem Kennzeichnungsteil des Patentanspruches 1.

Das Bremsventil vermag den bei Mischdruck-Bremsanlagen als Hochdruck am zweiten Kreis anliegenden Vorratsdruck von z. B. 16 bar wirksam auf einen ausgesteuerten Druck von z. B. 8 bar abzusenken, da die den Hilfskolben unter Vorspannung beaufschlagende Feder im Inneren der Relaiskolbenanordnung exakt auf den jeweils erwünschten maximalen Druck einstellbar ist. So kann als ausgesteuerter Druck des zweiten Kreises ein Druck bestehen, welcher demjenigen des ersten Kreises entspricht, er kann jedoch entsprechend der Vorspannung der Druckbegrenzungsfeder auch höher oder niedriger liegen.

In vorteilhafterweise kann die Vorspannung der Feder durch eine in ihrer Position veränderliche Schraube verändert werden, welche von außerhalb des Bremsventils betätigbar ist und als Fänger oder Auflage für die Feder dient. Hierbei ist das entgegengesetzte Ende der Feder im Inneren des den Hilfskolben aufnehmenden Kolben abgefangen. Sollte die Feder brechen, dann ist zumindest der erste Bremskreis wirksam; die Kolbenwege sind hierbei so abgestimmt, daß der Hilfskolben bei einem Federbruch bis zu seinem inneren Anschlag in Richtung des ersten Kreises ausweicht, d.h. daß der Hochdruck in diesem Fall nicht ausgesteuert wird. Sollte der erste Kreis ausfallen, also der Eingangsdruck am ersten Kreis nicht vorhanden sein, ist in an sich bekannter Weise ein mechanisches Durchsteuern auf den zweiten Kreis möglich, d.h. die Funktionsfähigkeit des Bremsventils bleibt zumindest mit einem Kreis erhalten.

Vorteilhafte Ausgestaltungen und Weiterbildungen sind in weiteren Patentansprüchen aufgeführt.

Die Erfindung ist nachfolgend anhand von Ausfürungsbeispielen unter Bezugnahme auf die beigefügte Zeichnungen erläutert.

Figur 1 ist eine Längsschnittansicht durch ein Zweikreis-Bremsventil nach der Erfindung;

Figur 2 ist eine entsprechende Schnittansicht durch ein Zweikreis-Bremsventil nach einer weiteren Ausführungsform gemäß der Erfindung

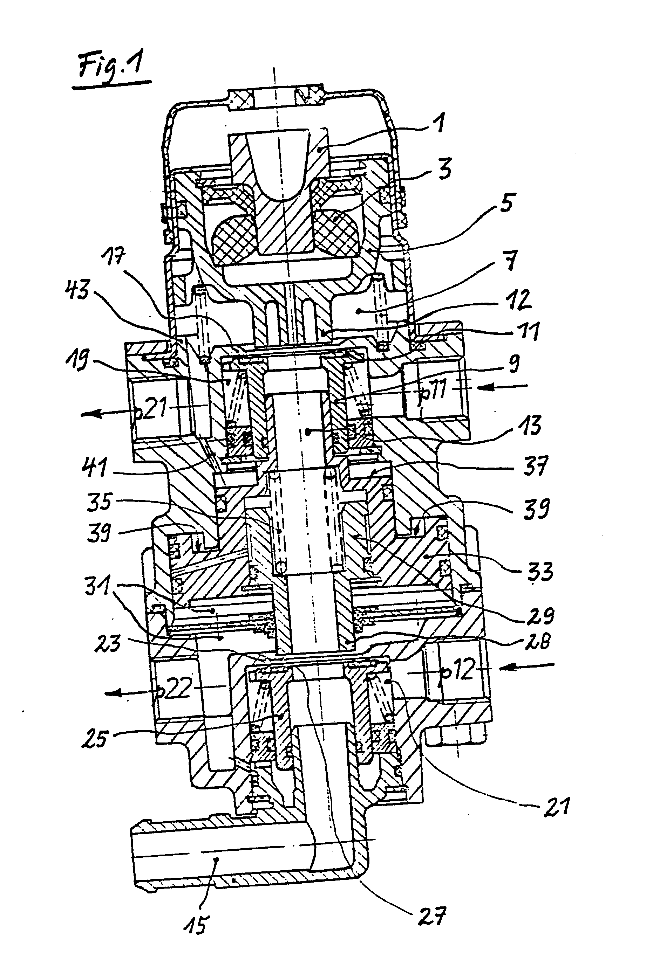

In Fig. 1 der Zeichnung ist eine Ausführungsform nach der Erfindung als Fußbremsventil mit lastabhängiger Regelung dargestellt, bei welchem ein (nicht dargestelltes) Bremspedal auf ein Druckstück 1 einwirkt; das Druckstück 1 stützt sich über eine Feder 3 an einem Kolben 5 ab, so daß der Kolben 5 bei Betätigung des Bremspedals gemäß Darstellung nach unten verschoben wird. Der Kolben 5 begrenzt eine Kammer 7 und wirkt gegenüber einem am oberen Ende einer Ventilhülse 9 angeordneten, ringförmigen Ventilelement 11. Das Ventilelement 11 bildet zusammen mit einem Ventilsitz 12 des Kolbens 5 ein Auslaßventil, welches in geöffneter Position die Kammer 7 mit einem im Inneren der Ventilhülse 9 vorgesehenen Entlüftungskanal 13 verbindet. Der Entlüftungskanal 13 durchsetzt das gesamte Fußbremsventil und mündet in einem an der Unterseite vorgesehenen Auslaß 15. Das Ventilelement 11 wirkt außerdem in dargestellter Weise gegenüber einem gehäusefesten Ventilsitz 17, mit welchem es ein Einlaßventil bildet; zwischen dem Ventilsitz 17 und der Ventilhülse 9 ist eine Einlaßkammer 19 vorgesehen, in welche ein mit dem Druckluftvorrat des ersten Kreises verbundener Anschluß p 11 mündet. Die Einlaßkammer 19 steht bei geschlossenem Auslaßventil und bei geöffnetem Einlaßventil mit der Kammer 7, der Bremsluftkammer des ersten Kreises in Verbindung, so daß die Druckluft aus der Einlaßkammer 19 über die Kammer 7, einen Anschluß p 12 und z. B. einen (nicht dargestellten) lastabhängig arbeitenden Bremskraftregler in die Bremszylinder der Hinterachse des Fahrzeuges gelangt, um diese zu betätigen.

Beim Ventilmechanismus des zweiten Bremskreises, des Vorderachsbremskreises, ist eine Einlaßkammer 21 vorgesehen, welche über einen Anschluß p 12 an einen Hochdruckvorrat angeschlossen ist. Die Einlaßkammer 21 ist durch einen gehäusefesten Ventilsitz 23 und durch eine Ventilhülse 25 begrenzt.

Die Ventilhülse 25 trägt ein Ventilelement 27, welches mit einem Ventilsitz 28 eines Hilfskolbens 29 ein Auslaßventil bildet. Das Auslaßventil ist geöffnet dargestellt; in dieser Lage verbindet das Auslaßventil eine Kammer 31, die Bremsluftkammer der Vorderachse, zum Zwecke der Entlüftung mit dem Entlüftungskanal und dem Auslaß 15. Die Kammer 31 steht über einen Anschluß p 22 mit den Bremszylindern des zweiten Kreises, d.h. mit den Bremszylindern der Vorderachse in Verbindung. Die Kammer wird durch die in der Einlaßkammer 21 anstehende Druckluft des zweiten Kreises belüftet, wenn der Ventilsitz 28 des Hilfskolbens 29 nach unten geschoben wird und gegenüber dem Ventilelement 27 dichtet, so daß der Auslaß geschlossen ist, und wenn gleichzeitig das Ventilelement 27 vom Ventilsitz 23 gelöst, also gemäß Darstellung nach unten gerichtet verschoben wird.

Der Hilfskolben 29 ist innerhalb eines Kolbens 33 geführt, wobei zwischen dem Kolben 33 und dem Hilfskolben 29 eine vorgespannte Feder 35 vorgesehen ist. Die Vorspannung wird dadurch erreicht, daß der Hilfskolben an seinem unteren Ende gemäß Darstellung durch einen Sicherungsring gehalten ist. Der Kolben 33 besitzt an seiner Oberseite zwei durch Dichtungen voneinander getrennte Ringflächen, nämlich eine innere Ringfläche 37 und eine äußere Ringfläche 39. Die innere Ringfläche 37 ist infolge des dargestellten Kanals 41 durch den am Anschluß p 21 herrschenden Druck beaufschlagbar, während die äußere Ringfläche 39 durch den ausgesteuerten Druck des lastabhängig wirkenden Bremskraftreglers an sich bekannter Wirkungsweise beaufschlagbar ist. Wenn die beiden Ringflächen des Kolbens 33 durch den Druck des Anschlußes p 21 bzw. den lastabhängigen Druck des Bremskraftreglers (nicht dargestellt) beaufschlagt werden, dann verschiebt sich der Kolben zusammen mit dem Hilfskolben 29 nach unten gerichtet und schließt in vorstehend genannter Weise das Auslaßventil und öffnet das Einlaßventil. Die Druckluft vom Anschluß p 12, welche in der Einlaßkammer 21 vorherrscht, strömt bei geöffnetem Einlaß in die Kammer 31 und beaufschlagt den Kolben 33 bzw. den Hilfskolben 29 auf ihrer Unterseite. Befindet sich der Bremskraftregler in Vollaststellung, bei welcher der Bremskraftregler einen Druck 1:1 aussteuert, dann stellt sich am Anschluß p 22 unabhängig von der Höhe des Vorratsdruckes am Anschluß p 12 der gleiche Druck ein wie am Anschluß p 21, da die beaufschlagten Flächen auf der Ober- und Unterseite des Kolbenpaares, bestehend aus Kolben 33 und Hilfskolben 29, gleich sind. Die Kraft der vorgespannten Feder 35 ist so bemessen, daß sich der Hilfskolben 29 unter der Einwirkung des am Anschluß p 22 in der Kammer 31 wirkenden normalen Druckes nicht relativ zum Kolben 33 verschiebt.

Wenn im dargestellten Ausführungsbeispiel im Anschluß p 11 ein Normaldruck von z. B. 8 bar herrscht, dann besteht dieser Druck auch am Anschluß p 21. Folglich wirkt der Druck des Anschlußes p 21 an der inneren Ringfläche 37. Bei Vollast des Bremskraftreglers wirkt ein gleicher Druck auf der äußeren Ringfläche 39 des Kolbens 33, da der Bremskraftregler über eine (nicht dargestellte) Verbindung mit dem äußeren Ringraum oberhalb des Kolbens 33 in Verbindung steht.

Herrscht am Anschluß p 12 ein Hochdruck von z. B. 16 bar, dann besteht in der Bremsenabschlußstellung am Anschluß p 22 gleichwohl nur ein Druck von 8 bar, da, wie vorstehend erwähnt, die beaufschlagten Flächen der Ober- und Unterseite des Kolbenpaares gleich sind und Einlaß- und Auslaßventil bei einem ausgesteuerten Druck von 8 bar in Bremsabschlußstellung sind. Das Kolbenpaar wirkt also in bekannter Weise in Form eines Relaiskolbens.

Es ist auch möglich, die vorgespannte Feder 35 so auszulegen, daß der maximal ausgesteuerte Druck am Anschluß p 22 kleiner oder größer ist als der maximale Druck am Anschluß p 21 des ersten Kreises.

Vorstehend wurde die normale Wirkungsweise des Fußbremsventils wiedergegeben, d.h. in einem Zustand, in welchem beide Kreise intakt sind und sich der Bremskraftregler in der Vollaststellung (1:1) befindet.

Nachfolgend seien zwei weitere Betriebszustände des Fußbremsventils nach der Erfindung wiedergegeben:

1. Der Kreis 1 der Hinterachse sei ausgefallen; der Druck am Anschluß p 11 = 0.

Wird das Druckstück bei Ausfall des Vorratsdruckes im Kreis 1 mechanisch bis zu dem inneren Anschlag 43 verschoben, dann ist der durch die Ventilhülse 9 gleichfalls nach unten verschobene Kolben 33 in einer Lage, in welcher der Hilfskolben 29 das Einlaßventil für den zweiten Kreis öffnet, d.h. es wird mechanisch durchgesteuert. Da die auf den Hilfskolben einwirkende, vorgespannte Feder 35 bei einem Druck oberhalb von 8 bar beginnt, nach oben gerichtet ausweicht, erfolgt somit die erwünschte Druckbegrenzung. Auslaßventil und Einlaßventil gelangen also in die Bremsenabschlußstellung und es herrscht am Anschluß p 22 ein Druck von z. B. 8 bar, obwohl am Anschluß p 12 ein Druck von z. B. 16 bar herrscht.

Bei mit gemischten Drücken arbeitenden Bremsanlagen ist es darüber hinaus möglich, daß der erste Kreis und der zweite Kreis über ein Mehrkreisschutzventil miteinander in Verbindung stehen. In diesem Fall fällt bei Ausfall des Vorratsdruckes im Kreis 1 der Druck im zweiten Kreis bis auf den Schließdruck des Mehrkreisschutzventils ab, d.h., daß im ersten und im zweiten Kreis im wesentlichen gleiche Vorratsdrücke bestehen. In diesem Fall steuert im zweiten Kreis ohnehin nur ein Druck von maximal z. B. 8 bar aus, d.h., daß der Hilfskolben mit der Feder 35 nicht zur Wirkung kommt.

2. Beide Kreise sind intakt; .

das Bremsventil wird bis zum inneren Anschlag 43 betätigt, d.h. der Kolben 5 stützt sich am Gehäuse ab:

Wird der Kolben 5 durch entsprechende starke Beaufschlagung des Druckstücks 1 mechanisch bis zum gehäusefesten Anschlag 43 (Fig. 1) verschoben, dann wird der Kolben 33 durch das Ventilelement 11 mechanisch nach unten gerichtet verschoben. Da das Ventilelement 11 vom gehäuseseitigen Ventilsitz abhebt, steht der Einlaß des ersten Kreises ständig offen; der am Anschluß p 11 anstehende Druck baut sich voll in der Kammer 7, am Anschluß p 21 und über den Kanal 41 an der inneren Ringfläche 37 des Kolbens 33 auf. Ferner wird die äußere Ringfläche 39 vom ausgesteuerten Druck p 4 des (nicht dargestellten) lastabhängigen Bremskraftreglers beaufschlagt.

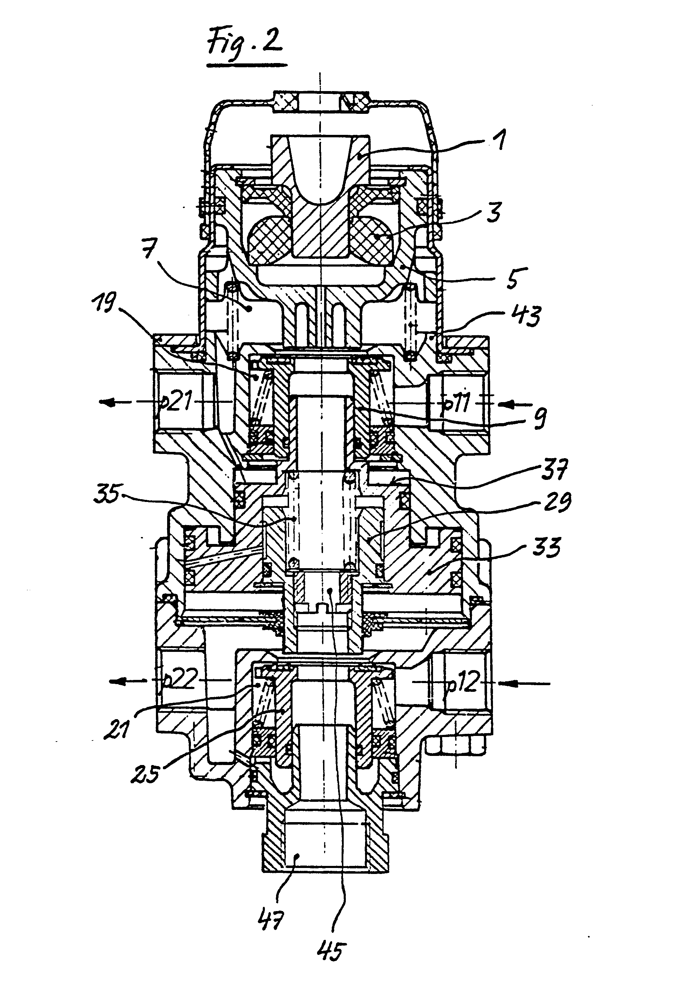

Da der Kolben 33 nahezu bis zu seiner Anschlagposition im Inneren des Gehäuses bewegt wird, würde bei nicht vorhandenem Hilfskolben 29 und der ausreichend großen Betätigungskraft, wie vorstehend beschrieben, das Einlaßventil des zweiten Kreises stets offen stehen, dies bedeutet, daß der Hochdruck am Anschluß p 12 über den Anschluß p 22 zu den Bremszylindern der Vorderachse und zum Anhängerbremsventil gelangen würde. Dies wird jedoch durch die erfindungsgemäße Einrichtung, bestehend aus Hilfskolben 29 und Feder 35 verhindert. Die Feder 35 ist so ausgelegt, daß sich der Hilfskolben bei dem gewünschten Druck p 22 max gegen die Kraft der Feder nach oben verschiebt und die Ventileinrichtung des zweiten Kreises in die Bremsabschlußstellung gelangt, d.h., daß in diesem Fall der Einlaß und der Auslaß geschlossen sind. Vorzugsweise wird p 22 max, d.h. der Begrenzungsdruck, so groß gewählt wie der maximale Druck am Anschluß p 21. Es ist natürlich auch möglich, einen höheren oder niedrigeren maximalen Druck am Anschluß p 22 auszusteuern. Wie Fig. 2 veranschaulicht, kann die Vorspannung der Feder 35 nach einer vorteilhaften Ausführungsform mit Hilfe einer Einstellschraube 45 verändert werden. Die Einstellschraube stützt ein Ende der Feder 35 ab und ist mit einem Außengewinde in einem entsprechenden Innengewinde (Fig. 2) des Hilfskolbens verschraubt. Die Einstellschraube kann von außerhalb, d.h. durch den axial gerichteten Auslaß 47 hindurch verdreht werden, um die erwünschte Einstellung vorzunehmen.

Die Einrichtung nach der Erfindung besitzt nicht nur den vorstehend erwähnten funktionellen Vorteil, sie erweist sich auch deshalb als zweckmäßig, weil sie zu einer einfachen Umrüstung von herkömmlichen Bremsventilen der in Rede stehenden Art geeignet ist. Hierbei ist lediglich erforderlich, den einteiligen Relaiskolben des herkömmlichen Ventils durch das Kolbenpaar, bestehend aus Kolben 33 und Hilfskolben 29, zu ersetzen.

Die Einrichtung nach der Erfindung ist natürlich nicht auf Bremsventile der unter Bezugnahme auf Fig. 1 und 2 beschriebenen Konstruktion beschränkt, d.h., die Einrichtung ist auch bei Bremsventilen ohne integriertem Druckwandler verwendbar, also bei Bremsventilen, bei welchen die gesamte Fläche des Relaiskolbens vom ausgesteuerten Druck am Anschluß p 21 beaufschlagt wird. Natürlich ist die Einrichtung auch bei Bremsventilen der in Rede stehenden Art verwendbar, welche zusätzliche Einrichtungen zur Beeinflußung des ersten und des zweiten Kreises aufweisen.

Bei einem Bremsventil, insbesondere einem Fußbremsventil für Bremsanlagen von Fahrzeugen, ist der erste Kreis, d. h. der Bremskreis für die Hinterachse, mit einem Normaldruck von z. B. 8 bar beaufschlagbar, während der Vorratsdruck für den zweiten Kreis, den Vorderachsbremskreis, z. B. 16 bar, betragen kann. Bei derartigen Mischdruck-Bremsanlagen wird mit einer Duckbegrenzung für den zweiten Kreis verhindert, daß der Vorrats-Hochdruck des zweiten Kreises voll durchsteuert, also als ausgesteuerter Druck im Vorderachsbremskreis zur Wirkung gelangen kann, falls bei intakten ersten und zweiten Kreisen eine mechanische Betätigung des Bremsventils bis auf Anschlag vorgenommen wird. Zum Zwecke der Hochdruckbegrenzung ist der zwischen den beiden Kreisen wirkende, vom ausgesteuerten Druck des ersten Kreises beaufschlagbare Relaiskolben mit einem Hilfskolben 29 versehen, welcher unter der Wirkung einer vorgespannten Feder 35 mit einem an ihm ausgebildeten Ventilsitz 28 gegenüber der Einlaß- und Auslaßventilanordnung des zweiten Kreises wirkt, derart, daß der Hilfskolben 29 bei Erreichen des einstellbaren maximalen Druckes in Richtung der Relaiskolbenanordnung ausweicht und demnach am zweiten Kreis ein entsprechend reduzierter Druck für die Bremszylinder der Vorderachse ausgesteuert wird.

**Bezugszeichenliste**

1 Druckstück
3 Feder
5 Kolben
7 Kammer
9 Ventilhülse
11 Ventilelement
12 Ventilsitz
13 Entlüftungskanal
15 Auslaß
17 Ventilsitz
19 Einlaßkammer

21 Einlaßkammer
23 Ventilsitz
25 Ventilhülse
27 Ventilelement
28 Ventilsitz
29 Hilfskolben
31 Kammer
33 Kolben
35 Feder
37 innere Ringfläche
39 äußere Ringfläche
41 Kanal
43 Anschlag
45 Einstellschraube
47 Auslaß

**Patentansprüche**

1. Zweikreis-Bremsventil, insbesondere Fußbremsventil für Bremsanlagen von Fahrzeugen, mit einem durch ein Druckstück (1) betätigbaren, den Druck in einer ersten, mit den Bremszylindern der Hinterachse verbundenen Kammer (7) steuernden Kolben (5) und einem in Betätigungsrichtung vom Druck der ersten Kammer (7) beaufschlagbaren Relaiskolben (29, 33), welcher den Druck in einer zweiten, mit den Bremszylindern der Vorderachse verbundenen Kammer (31) steuert, wobei zumindest einem der Kreise eine Druckbegrenzungseinrichtung zugeordnet ist, welche einen Vorrats-Hochdruck auf einen ausgesteuerten Normaldruck zu reduzieren vermag, dadurch gekennzeichnet, daß die Druckbegrenzungseinrichtung aus einem in der Relaiskolbenanordnung verschiebbar angeordneten, unter der Wirkung einer vorgespannten Feder (35) stehenden Hilfskolben (29) besteht, welcher mit einem an ihm ausgebildeten Ventilsitz (28) gegenüber der Einlaß- und Auslaßventilanordnung des zweiten Kreises wirkt, derart, daß der am zweiten Kreis anstehende Hochdruck auf einen ausgesteuerten Normaldruck reduzierbar ist.

2. Zweikreis-Bremsventil nach Anspruch 1, dadurch gekennzeichnet, daß der Hilfskolben (29) in einer axialen Ausnehmung eines Kolbens (33) geführt ist, welcher zusammen mit dem Hilfskolben den Relaiskolben bildet, wobei die Feder (35) unter Vorspannung mit ihren entgegengesetzten Enden sowohl am Kolben (33) als auch am Hilfskolben (29) abgestützt ist, und daß der Hub des Hilfskolbens (29) beidseitig durch Anschläge des Kolbens (33) festgelegt ist.

3. Zweikreis-Bremsventil nach einem der vorangehenden Ansprüche, dadurch gekennzeichnet, daß die Vorspannung der Feder (35) einstellbar ist.

4. Zweikreis-Bremsventil nach Anspruch 3, dadurch gekennzeichnet, daß das der Ventilanordnung des zweiten Kreises zugewandte Ende der Feder (35) im Inneren des Hilfskolbens an einer Einstellschraube (45) abgestützt ist, wobei die Einstellschraube gegenüber dem Hilfskolben mittels Verschraubung in ihrer Relativlage einstellbar ist.

**Claims**

1. Dual-circuit brake valve, in particular foot brake valve for vehicular brake systems, comprising a piston (5), capable of being actuated by a thrust member (1), controlling the pressure in a first chamber (7), connected to the brake cylinders of the rear axle, and a relay piston (29, 33), capable of being pressurized by the first chamber (7) in actuating direction which controls the pressure in a second chamber (31), connected to the brake cylinders of the front axle, a pressure limiting device, being capable of reducing a high supply pressure to a normal output pressure, being associated to at least one of the circuits, in which the pressure limiting device consists of an auxiliary piston (29), which can be moved in the relay piston system and is under the force of a pre-loaded spring (35), said auxiliary piston (29) cooperating, with a valve seat (28), provided at the latter, opposite of the inlet and outlet valve system of the second circuit, such that the high pressure applied to the second circuit can be reduced to a normal output pressure.

2. Dual-circuit brake valve according to Claim 1, in which the auxiliary piston (29) is guided in an axial recess of a piston (33) which, together with the auxiliary piston, forms the relay piston, the preloaded spring (35) being supported at its opposed ends by both piston (33) and auxiliary piston (29), the stroke of the auxiliary piston (29) being fixed by limit stops at both ends of piston (33).

3. Dual-circuit brake valve according to one of the preceding Claims, in which the preload of the spring (35) is adjustable.

4. Dual-circuit brake valve according to Claim 3, in which the end of the spring (35) facing the valve system of the second circuit is supported by an adjusting screw (45) inside the auxiliary piston, the relative position of the adjusting screw being adjustable in relation to the auxiliary piston by means of a screw fitting.

**Revendications**

1. Soupape de freinage à deux circuits, en particulier soupape de freinage au pied pour des installations de freinage de véhicules, avec un piston (5) qui est susceptible d'être actionné au pied et qui est capable de contrôler la pression dans une première chambre (7) reliée aux cylindres de frein de l'axe arrière, et avec un piston de relais (29, 33) qui est susceptible d'être chargé, dans le sens de la commande, par la pression qui règne dans la première chambre (7), et qui contrôle la pression qui règne dans une seconde chambre (31) qui est reliée aux cylindres de frein de l'axe avant, du type dans laquelle à au moins l'un des circuits est associé un dispositif de limitation de la pression qui est capable de réduire une haute pression de réserve à une pression normale réglée, caractérisée par le fait que le dispositif de limitation de la pression est constitué par un piston auxiliaire (29) qui est disposé à coulissement dans le dispositif à piston de relais, qui est sous l'action d'un ressort préarmé (35), et qui agit, à l'aide d'un siège de soupape (28) qu'il comporte en face du dispositif à soupapes d'admission et d'évacuation, et cela de manière que la haute pression qui règne dans le second circuit est susceptible d'être réduite à une pression normale réglée.

2. Soupape de freinage à deux circuits selon la revendication 1, caractérisée par le fait que le piston auxiliaire (29) est guidé dans une cavité axiale d'un piston (33) qui constitue, avec le piston auxiliaire, le piston de relais, la réalisation étant telle que le ressort (35) prend appui, en étant préarmé, par ses extrémités opposées aussi bien contre le piston (33) que contre le piston auxiliaire (29), et que la course du piston auxiliaire (29) est déterminée, des deux côtés, par des butées du piston (33).

3. Soupape de freinage à deux circuits selon l'une des revendications précédentes, caractérisée par le fait que le préarmement du ressort (35) est réglable.

4. Soupape de freinage à deux circuits selon la revendication 3, caractérisée par le fait que l'extrémité du ressort (35) qui est voisine du dispositif à soupapes du second circuit, prend appui, à l'intérieur du piston auxiliaire, contre une vis de réglage (45), celle-ci étant réglable, du point de vue de sa position relative par rapport au piston auxiliaire, à l'aide de moyens de vissage.

Fig.1

Fig.2